Europäisches Patentamt

European Patent Office

Office européen des brevets

(19)

(11) Numéro de publication: **0 197 848**
**B1**

(12)
# FASCICULE DE BREVET EUROPEEN

(45) Date de publication du fascicule du brevet:
05.09.90

(21) Numéro de dépôt: 86400674.7

(22) Date de dépôt: 27.03.86

(51) Int. Cl.⁵: **H01S 3/083, H01S 3/081,**
**H01S 3/00, H05H 1/22**

(54) Dispositif permettant d'allonger les impulsions d'un laser.

(30) Priorité: 05.04.85 FR 8505248

(43) Date de publication de la demande:
15.10.86 Bulletin 86/42

(45) Mention de la délivrance du brevet:
05.09.90 Bulletin 90/36

(84) Etats contractants désignés:
DE FR GB

(56) Documents cités:
US-A- 4 422 046

APPLIED OPTICS,
vol. 22, no. 9, 1 mai 1983, pages 1289-1292, Optical
Society of America, New York, US; M.W. TAYLOR et al.:
"Pulse compression by pulse-stacking in a KrF
amplifier"

(73) Titulaire: COMMISSARIAT A L'ENERGIE ATOMIQUE,
31/33, rue de la Fédération, F-75015 Paris(FR)

(72) Inventeur: Baron, Henri, 10, rue Jeanne d'Arc,
F-75013 Paris(FR)
Inventeur: Sauteret, Jacques, 247, rue de Tolbiac,
F-75013 Paris(FR)

(74) Mandataire: Mongrédien, André et al, c/o
BREVATOME 25, rue de Ponthieu, F-75008 Paris(FR)

ACTORUM AG

**Description**

La présente invention a pour objet un dispositif permettant d'allonger les impulsions d'un laser. Ses applications sont celles des lasers en général, et plus spécialement l'interaction rayonnement-matière.

Bien que l'invention s'applique à la plupart des lasers travaillant en régime impulsionnel, elle concerne surtout les lasers émettant des impulsions brèves. C'est la cas notamment des lasers dits à excimères (ou exciplexes). Pour décrire le problème que permet de résoudre l'invention, on prendra ce type de lasers comme exemple, sans qu'il s'agisse là en aucune manière d'une limitation de la portée de l'invention.

Pour une description générale des principes et les caractéristiques des lasers à excimères, on pourra se reporter par exemple à l'article de J.J. EWING intitulé "Excimer Lasers" et publié dans "Laser Handbook" édité par M.L. STICH, North-Holland Publ. Company, 1979, pp. 135-197.

Les lasers à excimères ont des longueurs d'onde situées dans l'ultraviolet (avec KrF par exemple, la longueur d'onde est de 0,248 μm). Ils possèdent la propriété d'émettre leur rayonnement avec un rendement qui peut être compris entre 1 et 10%, à comparer au rendement de quelques pour mille des lasers à verre. Par ailleurs, le domaine de longueurs d'onde en question est très favorable à divers processus d'interaction rayonnement-matière. Ces lasers présentent donc un réel intérêt. Ils sont capables de fonctionner en régime impulsionnel et, dans ces conditions, d'émettre de très fortes énergies.

La méthode la plus efficace pour réaliser l'inversion de population, origine de l'effet laser, dans le mélange gazeux actif de ces lasers, est d'utiliser un ou plusieurs faisceaux d'électrons qui permettent d'obtenir une puissance d'excitation de 0,1 à 5 MW/cm³. Pour un laser à KrF par exemple (composition volumique : Ar=95%, Kr=4,6%, F=0,4%), le pompage est obtenu par des électrons d'énergie comprise entre 200 keV et 1 MeV, avec des densités de courant de 10 à plus de 100 A/cm². 

L'une des caractéristiques essentielles d'un excimère est la courte durée de vie de l'état excité impliqué (inférieure à 10 ns pour KrF*). Ceci conduit à une forte valeur de la section efficace d'émission stimulée (environ 10⁻¹⁶ cm²) mais empêche le stockage de l'énergie. L'extraction d'une quantité appréciable d'énergie d'un tel milieu va donc nécessiter l'utilisation d'un temps de fonctionnement (pompage puis émission laser) assez long (plusieurs centaines de nanosecondes). Puisque les lasers à excimères ne peuvent pas stocker l'énergie, cette dernière doit leur être fournie en permanence pendant toute la dure durant laquelle on désire utiliser l'effet laser.

Une chaîne laser de puissance est ordinairement constituée d'un générateur d'impulsions suivi de toute une série d'amplificateurs de puissance. Ce schéma reste valable pour les lasers excimères, mais on doit prendre en compte la nécessité de disposer d'une impulsion de longue durée pour obtenir une forte énergie et un bon rendement d'extraction de cette énergie. Bien qu'avec un laser à excimères, il soit possible d'engendrer directement une impulsions de longue durée, 500 ns par exemple, il est souvent plus efficace et moins coûteux d'obtenir cette impulsion à partir d'une impulsion mère, brève (20 ns), que peut facilement délivrer un laser à pompage par décharge, disponible dans le commerce, d'allonger cette impulsion mère puis de la porter à un niveau d'énergie donné. Pour allonger une impulsion brève, on peut utiliser un dispositif qui sépare d'abord l'impulsion incidente en n impulsions (à l'aide de lames séparatrices) puis qui retarde ces n impulsions les unes par rapport aux autres d'un intervalle égal à leur durée pour les rendre consécutives ; puis on introduit ces n impulsions consécutives dans un amplificateur qui les porte au niveau d'énergie requis.

Un tel dispositif est très complexe (multiples lames séparatrices, lignes à retard) et son réglage est difficile ; il conduit, en outre, à attaquer l'amplificateur avec un éclairement faible.

La présente invention propose un autre moyen d'allongement et d'amplification beaucoup plus simple. Ce moyen est en soit connu puisqu'il s'agit d'un amplificateur en anneau, mais qui est utilisé et constitué d'une manière originale.

L'association d'un laser oscillateur et d'un amplificateur en anneau a été souvent utilisée pour amplifier une impulsion de laser tout en gardant la longueur d'onde, la polarisation et la cohérence du laser oscillateur. La théorie de ce dispositif est décrite notamment dans un article de C.J. BUCZEK et al. intitulé "Laser Injection Locking" publié dans "Proceedings of the IEEE", vol.61, n°10, octobre 1974, pp.1411-1431.

Il faut observer attentivement que, dans ces équipements connus, la fonction remplie par l'amplificateur en anneau n'est jamais d'allonger l'impulsion émise par le laser oscillateur mais d'amplifier celle-ci tout en conservant ses caractéristiques et notamment sa durée.

On connaît toutefois un dispositif qui utilise un anneau amplificateur. Un tel dispositif est décrit dans le brevet américain US-A-4.422.046. Il comprend une lame semi-réfléchissante et trois miroirs. L'un des miroirs est en fait composé de deux miroirs, ce qui permet de faire varier la direction du faisceau lumineux à chaque réflexion. Par ailleurs, le dispositif comprend des lentilles. Pour compenser le retournement spatial du faisceau produit par ces lentilles, un des miroirs est réalisé sous forme de dièdre qui renverse à nouveau le faisceau. On obtient ainsi une impulsion de sortie qui est bien analogue à l'impulsion d'entrée.

Par ailleurs, la longueur de l'anneau est telle que le temps de parcours de l'anneau par la lumière est égal à la durée de l'impulsion incidente.

Avec un dispositif de ce genre, une suite d'impulsions est émise à travers le miroir semi-transparent, ces impulsions étant toute décalées angulairement les unes par rapport aux autres. Il n'y a donc pas à proprement parler d'allongement de l'impulsion incidente, mais plutôt division et formation d'une suite d'impulsions distinctes dans l'espace.

La présente invention selon la revendication 1 reprend certaines dispositions utilisées dans cet art antérieur, avec toutefois trois modifications importantes qui permettent d'obtenir une véritable impulsion allongée, à sommet plat. Ces trois caractéristiques sont les suivantes :

- l'anneau est plan, en ce sens que le trajet du faisceau reste dans un plan et ne se trouve pas décalé angulairement à chaque passage,
- au lieu d'éviter le retournement spatial du faisceau dans son parcours de l'anneau, on provoque au contraire ce retournement au moyen d'un trièdre réflecteur, qui, comme on le sait, a pour effet d'inverser spatialement le faisceau qui s'y réfléchit ; cette disposition permet d'homogénéiser le faisceau lorsque le milieu amplificateur n'est pas lui-même parfaitement homogène,
- un élément biréfringent, comme une lame de quartz ou une cellule de Pockels, est disposé dans l'anneau, sur le trajet du faisceau, ce qui a pour effet de modifier la polarisation du faisceau à chaque passage et d'éviter les phénomènes d'interférences constructives ou destructives dans les zones de chevauchement des impulsions de sortie.

Par ailleurs, selon une autre disposition combinée avantageusement aux précédentes, les deux bras amplificateurs de l'anneau ainsi que les moyens pour l'extraire et former le faisceau d'utilisation, sont disposés de telle sorte que le milieu amplificateur soit utilisé au maximum.

Tous ces moyens combinés permettent d'obtenir une impulsion unique allongée, à sommet plat, même si la forme de l'impulsion incidente n'est pas rectangulaire et même si la durée de cette impulsion excède légèrement le temps de parcours dans l'anneau.

De toutes façons, les caractéristiques de l'invention apparaîtront mieux après la description qui va suivre. Cette description se réfère à des dessins annexés sur lesquels :

- la figure 1 illustre un laser selon l'invention,
- la figure 2 montre une coupe schématique du dispositif montrant le volume occupé par les différents faisceaux,
- la figure 3 est un schéma permettant d'expliquer le fonctionnement du laser,
- la figure 4 est un diagramme montrant la forme de l'impulsion délivrée par le laser de l'invention.

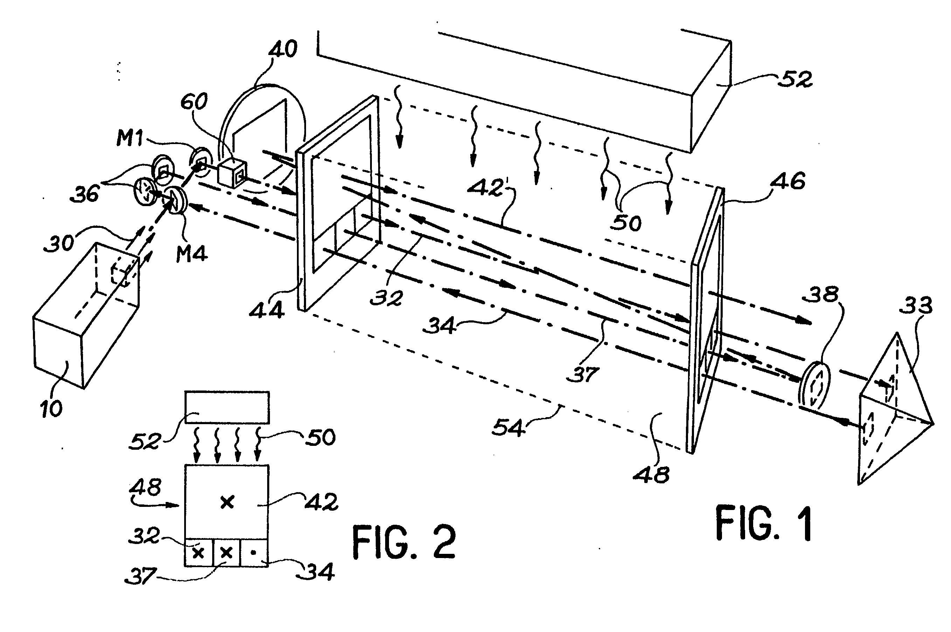

La figure 1 montre un mode particulier de réalisation du dispositif amplificateur-allongeur de l'invention. Un laser oscillateur 10 émet un faisceau 30 mis sous forme rectangulaire par des moyens non représentés (diaphragme). Ce faisceau est dirigé sur une lame semi-transparente M4 (transmission T=0,9 et réflexion R=0,1 par exemple) ; la partie transmise vient frapper un miroir M1 ; le faisceau réfléchi parcourt un volume amplificateur 32, se réfléchit sur un trièdre trirectangle 33 et parcourt un second volume amplificateur 34 ; le faisceau atteint à nouveau la lame M4 ; une partie est réfléchie vers le miroir M1 et une partie complémentaire est transmise vers un dièdre 36, qui renvoie le faisceau dans un volume 37 compris entre les deux volumes amplificateurs 32 et 34. Les trois volumes 32, 34, 37 sont jointifs, du fait de la forme rectangulaire du faisceau comme ceci apparaît mieux sur la figure 2.

A l'extrémité droite se trouve un miroir réfléchissant convexe 38 qui renvoie le faisceau vers un miroir concave 40, lequel réfléchit le faisceau à travers un volume 42. Le système optique 38, 40 joue le rôle de dispositif afocal hors de l'axe. Le volume 42 est juxtaposé aux volumes 32, 34, 37 comme on le voit bien sur la figure 2.

Le dispositif comprend en outre deux hublots 44 et 46 qui ferment une enceinte 48 remplie de gaz (avec une composition telle qu'indiquée plus haut) ; ce gaz est excité par un faisceau d'électrons 50 provenant d'un générateur 52. Ce faisceau est injecté dans le volume 48 à travers une feuille mince 54. Le faisceau d'électrons occupe la totalité des volumes 48, 32, 34 et 37. L'utilisation totale du volume amplificateur supprime les volumes excités non stimulés. Or, ces volumes, lorsqu'ils existent, donnent naissance à de l'émission spontanée qui vient perturber le faisceau amplifié et dépeupler le volume amplificateur.

Le dispositif comprend en outre un élément biréfringent 60 placé dans l'anneau, de préférence dans une zone où l'intensité est faible, c'est-à-dire juste après la lame M4. La polarisation de la lumière se trouve alors être modifiée à chaque tour, par exemple de 90°. On évite ainsi les problèmes d'interférences en cas de recouvrement d'impulsions successives. L'utilisation d'une cellule de Pockels comme élément biréfringent permet en outre de faire du multiplexage temporel.

L'emploi d'un trièdre trirectangle 33 permet non seulement de renvoyer la lumière dans une direction parallèle à la direction incidente, mais également de retourner spatialement le faisceau, ce qui l'homogénéise dans le cas où l'amplification ne serait pas parfaitement uniforme.

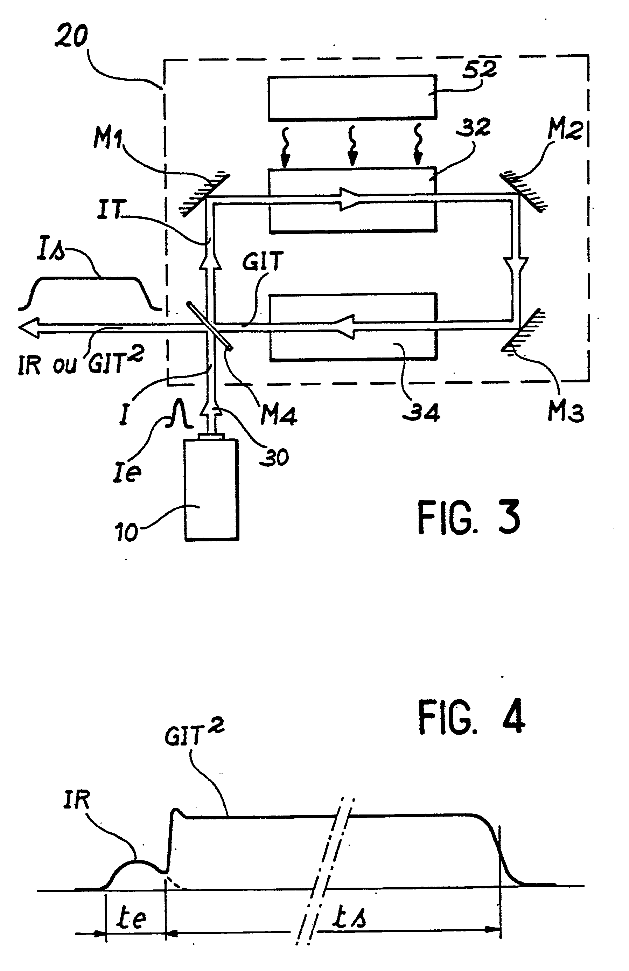

La figure 3 permet de comprendre le mécanisme de l'allongement de l'impulsion. Pour plus de clarté, le dispositif a été schématisé. C'est ainsi que le trièdre 33 est représenté par deux miroirs M2 et M3 et que l'élément biréfringent 60 n'a pas été représenté. On retrouve cependant le laser oscillateur 10 émettant un faisceau 30 et le dispositif d'allongement comprenant deux bras amplificateurs 32 et 34 excités par un moyen commun 52. Le résonateur en anneau est formé par les quatre miroirs M1, M2, M3 et M4, ce dernier étant une lame semi-transparente.

On suppose que l'impulsion Ie qui entre dans l'anneau et qui est émise par l'oscillateur 10 a une durée Te et une intensité I. La lame M4 a un coefficient de transmission T et un coefficient de réflexion R (on a donc T=1-R aux pertes près). Le gain du dispositif 20, pour un tour complet et en régime permanent, a la valeur G. Le temps de parcours de l'anneau, soit Tp, est supposé égal à la durée Te.

Le fonctionnement de ce dispositif est alors le suivant.

La lame M4 recevant l'impulsion d'intensité I réfléchit une partie IR de cette impulsion et transmet la partie complémentaire IT. Après un premier tour complet dans l'anneau amplificateur, l'intensité du faisceau devient $G_1 IT$, où $G_1$ est le gain pour les faibles signaux. Le front avant de l'impulsion amplifiée atteint la lame séparatrice M4 alors que le front arrière de l'impulsion incidente quitte cette même lame, puisque l'on a supposé par hypothèse que Te=Tr.

La lame M4 recevant une impulsion d'intensité $G_1$ IT en transmet une part $G_1IT^2$ et en réfléchit la part complémentaire $G_1ITR$. Le faisceau réfléci accomplit un nouveau tour dans l'anneau et se retrouve après un tour avec une intensité $G_1ITRG_2$ où $G_2$ est le gain correspondant à l'intensité du faisceau. Ce gain peut être plus faible ou plus élevé que $G_1$ selon que l'intensité est plus forte ou plus faible. Le milieu amplificateur contenu dans les bras 32 et 34 est un milieu à gain saturable. Cela signifie que l'intensité du rayonnement qui le traverse ne peut croître indéfiniment au cours des différentes amplifications. Pour une certaine intensité, le gain reste pratiquement constant et tel que $G=1/R$ pour chaque parcours de l'anneau.

La raison de ce phénomène de saturation tient à ce que, plus l'intensité du rayonnement est grande, plus ce rayonnement dépeuple le niveau supérieur de la transition laser, et cela par émission stimulée, et plus l'inversion de population se trouve réduite.

Au début du processus d'amplification, la quantité IT est inférieure à l'intensité de saturation et le gain $G_1$ est grand. Le faisceau est amplifié et bien que R soit inférieur à 1, la quantité $G_1R$ est voisine de l'unité. Mais plus l'intensité du rayonnement parcourant l'anneau croît, plus le gain diminue ($G_2<G_1$, $G_3<G_2$, etc...) ; il arrive nécessairement un moment où ce gain est juste suffisant pour entretenir l'intensité du rayonnement. Ce gain, que l'on pourrait appeler gain de boucle, et qui est noté G, est tel qu'après un tour complet, le faisceau se retrouve avec la même intensité.

Ainsi, après une période transitoire brève (qui dépend des conditions opératoires), le rayonnement prend une intensité constante qui est GIT avant réflexion sur la lame M4 et GITR=IT après réflexion sur cette lame.

Comme le front avant de chaque impulsion amplifiée arrive sur la lame M4 à l'instant où le front arrière de l'impulsion précédente quitte la lame, il y a continuité de l'intensité lumineuse transmise par la lame et cette intensité demeure égale à $GIT^2$.

Ce processus se poursuit tant que le gain G est présent dans le milieu amplificateur, c'est-à-dire tant que les moyens 52 assurent le pompage des bras 32 et 34. Si la durée du pompage est t, la durée Ts de l'impulsion de sortie est de l'ordre de t.

La figure 4 schématise ce fonctionnement en montrant l'allure de l'impulsion de sortie Is délivrée par l'anneau amplificateur. Cette impulsion présente un front avant de durée Te qui correspond à la réflexion de l'impulsion d'entrée Ie sur la lame M4; puis elle présente un long palier d'intensité $GIT^2$ de durée Ts qui correspond à la suite continue des impulsions amplifiées dans l'anneau. Des phénomènes transitoires peuvent apparaître lors des premiers passages, et moduler quelque peu l'intensité.

Dans la description qui précède, il a été supposé que la condition Te=Tp était parfaitement satisfaite. Cette condition n'est toutefois pas impérative et l'on peut avoir Te légèrement supérieur à Tp, ce qui signifie qu'il y aura chevauchement partiel des différentes impulsions amplifiées tour après tour. La combinaison de ces impulsions dépend alors d'une condition de phase (interférences) et il n'y aura superposition que si les champs sont en phase. Cette condition ne peut être obtenue qu'en donnant à la longueur de l'anneau une valeur correcte égale à un multiple de la longueur d'onde. Dans l'invention, cette contrainte est évitée grâce à l'utilisation de l'élément biréfringent 60 qui modifie la polarisation du faisceau. Il n'y a plus alors d'interférence entre des parties d'impulsions se chevauchant.

## Revendications

1. Dispositif permettant d'allonger les impulsions d'un laser, comprenant un anneau (20) contenu dans un volume amplificateur, cet anneau étant formé par un miroir semi-réfléchissant (M4) recevant une impulsion provenant d'un laser oscillateur (10) et trois autres miroirs (M1, M2, M3), le temps de parcours Tp de l'impulsion dans l'anneau étant inférieur ou égal à la durée Te d'une impulsion provenant du laser oscillateur 10), cet anneau étant excité pour être amplificateur pendant une durée t très supérieure à Te, ce dispositif étant caractérisé par le fait que le trajet de la lumière dans l'anneau est plan, que deux des miroirs (M2, M3) sont constitués par un trièdre trirectangle (33) et qu'il comprend un élément biréfringent (60), placé dans l'anneau, cet anneau délivrant une impulsion unique amplifiée et allongée de durée Ts sensiblement égale à t.

2. Dispositif selon la revendication 1, caractérisé par le fait qu'il comprend un dièdre (36) situé derrière le miroir semi-réfléchissant (M4), ce dièdre (36) recevant la partie de la lumière qui vient de l'anneau et traverse le miroir semi-réfléchissant (M4) et renvoyant cette partie sous forme d'un faisceau (37) situé entre deux bras amplificateurs (32, 34) de l'anneau, les volumes (32, 34, 37) occupés par ces trois faisceaux correspondants étant contigus.

3. Dispositif selon la revendication 2, caractérisé par le fait qu'il comprend un miroir convexe (38) placé devant le trièdre (33) et sur le trajet du faisceau (37) réfléchi par le dièdre (36), la normale à ce miroir étant légèrement inclinée par rapport à la direction du faisceau que ce miroir reçoit, ce miroir convexe (38) renvoyant un faisceau à travers le milieu amplificateur sur un miroir concave (40) l'ensemble de ces deux miroirs concave-convexe (38, 40) formant un système afocal, le faisceau réfléchi par le miroir concave (40) traversant le volume amplificateur (48) et occupant un volume (42) situé au-dessus des volumes occupés par les faisceaux (32, 34, 37) et contigus à ceux-ci.

## Claims

1. Device permitting the expansion of the pulses of a laser, comprising a ring (20) contained within an amplifying space, this ring being formed by a semi-reflecting mirror (M4) receiving a pulse originating from an oscillator laser (10) and three other mirrors (M1, M2, M3), the transit time Tp of the pulse within the ring being less than or equal to the duration Te of a pulse originating from the oscillator laser (10), this ring being excited to be amplifying during a duration t which is very much greater than Te, this device being characterized in that the path of the light within the ring is plane, in that two of the mirrors (M2, M3) are constituted by a trirectangular trihedron (33), and in that it comprises a birefringent element (60), located within the ring, this ring delivering an amplified and expanded single pulse of duration Ts substantially equal to t.

2. Device according to Claim 1, characterized in that it comprises a dihedron (36) situated behind the semi-reflecting mirror (M4), this dihedron (36) receiving that part of the light which comes from the ring and passes through the semi-reflecting mirror (M4) and deflecting this part in the form of a beam (37) situated between two amplifying arms (32, 34) of the ring, the spaces (32, 34, 37) occupied by these three corresponding beams being contiguous.

3. Device according to Claim 2, characterized in that it comprises a convex mirror (38) located in front of the trihedron (33) and on the path of the beam (37) reflected by the dihedron (36), the normal to this mirror being slightly inclined in relation to the direction of the beam which this mirror receives, this convex mirror (38) deflecting a beam through the amplifying medium onto a concave mirror (40) the assembly of these two concave-convex mirrors (38, 40) forming an afocal system, the beam reflected by the concave mirror (40) passing through the amplifying space (48) and occupying a space (42) situated above the spaces occupied by the beams (32, 34, 37) and contiguous with the latter.


## Patentansprüche

1. Vorrichtung zur Verlängerung von Laserimpulsen mit einem in einem Verstärkervolumen enthaltenen Ring (20), wobei dieser Ring aus einem halbreflektierenden Spiegel (M4), der einen von einem Laseroszillator (10) kommenden Impuls empfängt, und drei anderen Spiegeln (M1, M2, M3) besteht, wobei die Umlaufzeit Tp des Impulses in dem Ring kleiner oder gleich der Dauer Te eines von dem Laseroszillator (10) kommenden Impulses ist, wobei dieser Ring angeregt wird, um während einer Dauer t, die wesentlich länger ist als Te, ein Verstärker zu sein, wobei diese Vorrichtung gekennzeichnet ist durch die Tatsache, daß der Lichtweg in dem Ring eben ist, daß zwei der Spiegel (M2, M3) aus einem Trieder (33) mit drei rechten Winkeln bestehen und sie ein doppelbrechendes, in dem Ring angeordnetes Element (60) umfaßt, wobei dieser Ring einen einzigen, verstärkten Impuls abgibt, der um eine Dauer Ts verlängert ist, die im wesentlichen gleich t ist.

2. Vorrichtung nach Anspruch 1, gekennzeichnet durch die Tatsache, daß sie einen hinter dem halbreflektierenden Spiegel (M4) angeordneten Dieder (36) aufweist, wobei dieser Dieder (36) den Teil des Lichtes empfängt, der von dem Ring kommt und durch den halbreflektierenden Spiegel (M4) geht, und diesen Teil in der Form eines zwischen den beiden Verstärkerarmen (32, 34) angeordneten Strahls (37) weiterschickt, wobei die von diesen Strahlen beanspruchten Volumen (32, 34, 37) aneinander stoßen.

3. Vorrichtung nach Anspruch 2, gekennzeichnet durch die Tatsache, daß sie einen konvexen Spiegel (38) aufweist, der vor dem Trieder (33) und in dem Weg des von dem Dieder (36) reflektierten Strahls (37) angeordnet ist, wobei die Normale dieses Spiegels leicht bezüglich der Richtung des Strahls, den dieser Spiegel empfängt, geneigt ist, wobei dieser konvexe Spiegel (38) einen Strahl durch die Mitte des Verstärkers auf einen konkaven Spiegel (40) schickt, wobei die beiden konkaven-konvexen Spiegel (38, 40) ein brennpunktloses System bilden, wobei der von dem konkaven Spiegel (40) reflektierte Strahl das Verstärkervolumen (48) durchquert und ein Volumen (42) einnimmt, das oberhalb der von den Strahlen (32, 34, 37) eingenommenen Volumen liegt und diese berührt.

FIG. 1

FIG. 2

EP 0 197 848 B1

FIG. 3

FIG. 4